# EUROPÄISCHE PATENTSCHRIFT

(11) **EP 0 544 051 B1**
(45) Veröffentlichungstag und Bekanntmachung des Hinweises auf die Patenterteilung: **24.01.1996**
(21) Anmeldenummer: 92108881.1
(22) Anmeldetag: 26.05.1992
(51) Int. Cl.: F16L 3/01

(54) **Schleppkettenersatz**
Supporting chain replacement
Remplacement pour chaînes de guidage pour câbles

(30) Priorität: 26.11.1991 EP 91120167
(43) Veröffentlichungstag der Anmeldung: 02.06.1993
(60) Teilanmeldung: 95107663.7
(73) Patentinhaber: W.L. Gore & Associates GmbH, D-85636 Putzbrunn (DE)
(72) Erfinder: Trieb, Karl-Heinz, W-8820 Gunzenhausen (DE); Meier, Karl, W-8548 Heideck (DE)
(74) Vertreter: Klunker . Schmitt-Nilson . Hirsch

(56) Entgegenhaltungen:
- EP-A- 0 444 584
- US-A- 3 473 769
- US-A- 3 630 325

## Beschreibung

Die Erfindung betrifft einen Schleppkettenersatz für eine Leitungsanordnung, deren Enden mit einer feststehenden Einrichtung bzw. mit einer relativ dazu beweglichen Einrichtung verbunden sind und die zwischen deren Enden flexibel ist.

Mit einem derartigen Schleppkettenersatz kann beispielsweise eine hin- und herbewegbare Einrichtung mit einer feststehenden Einrichtung verbunden werden.

Herkömmlicherweise verwendet man hierzu Schleppketten oder Schleppkettenanordnungen, die zwei oder mehrere Kettenbänder aus Metall oder Kunststoff aufweisen, in denen einzelne Leitungen geführt sind. Sind die feststehende Einrichtung und die hin- und herbewegliche Einrichtung übereinander angeordnet und überschreitet die Schleppketten im Hinblick auf den erforderlichen Bewegungsweg der beweglichen Einrichtung eine bestimmte Länge, legt sich das Obertrum der Schleppkette auf deren Untertrum ab. Dies führt entweder zu einer starken mechanischen Belastung der Schleppkette oder muß durch eine Zwischendecke in Form eines Gleitbleches in einem Führungskanal für die Schleppkette verhindert werden, wobei das obere Trum der Schleppkette auf dem Gleitblech abgelegt wird. Hinzu kommt, daß eine derartige Schleppkette aufgrund eines hohen Herstellungs- und Montageaufwandes teuer ist, erhebliche Bewegungsgeräusche verursachen kann und aufgrund des Spiels der Kettenglieder relativ zueinander eine Längsdehnung ermöglicht, die häufig unerwünscht ist.

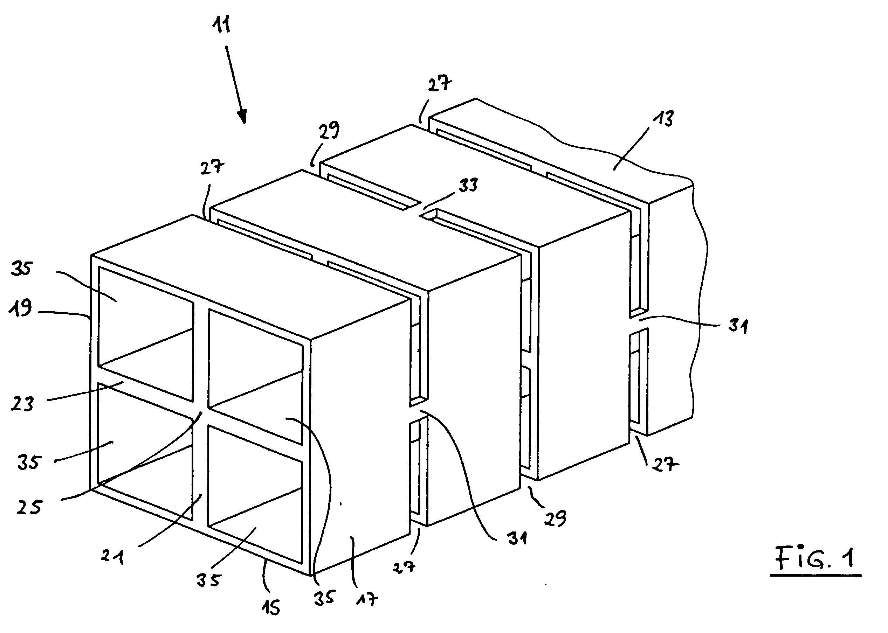

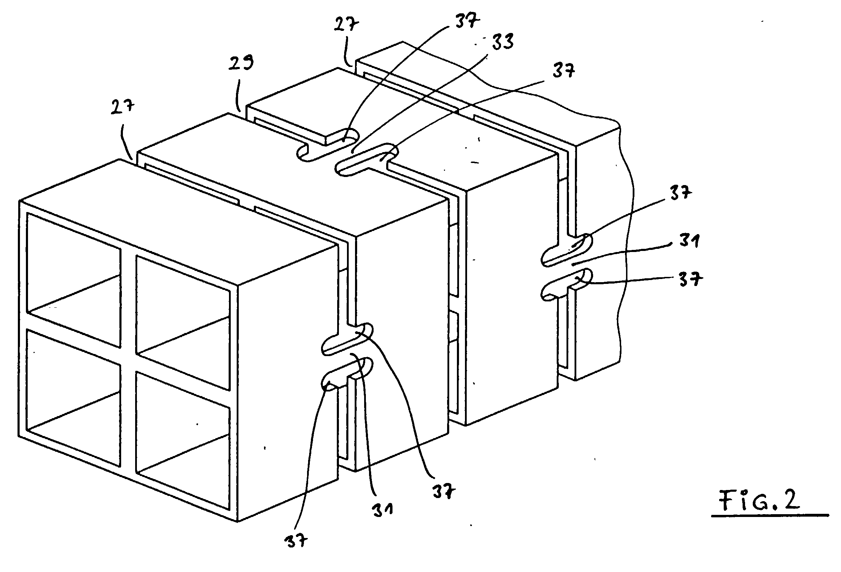

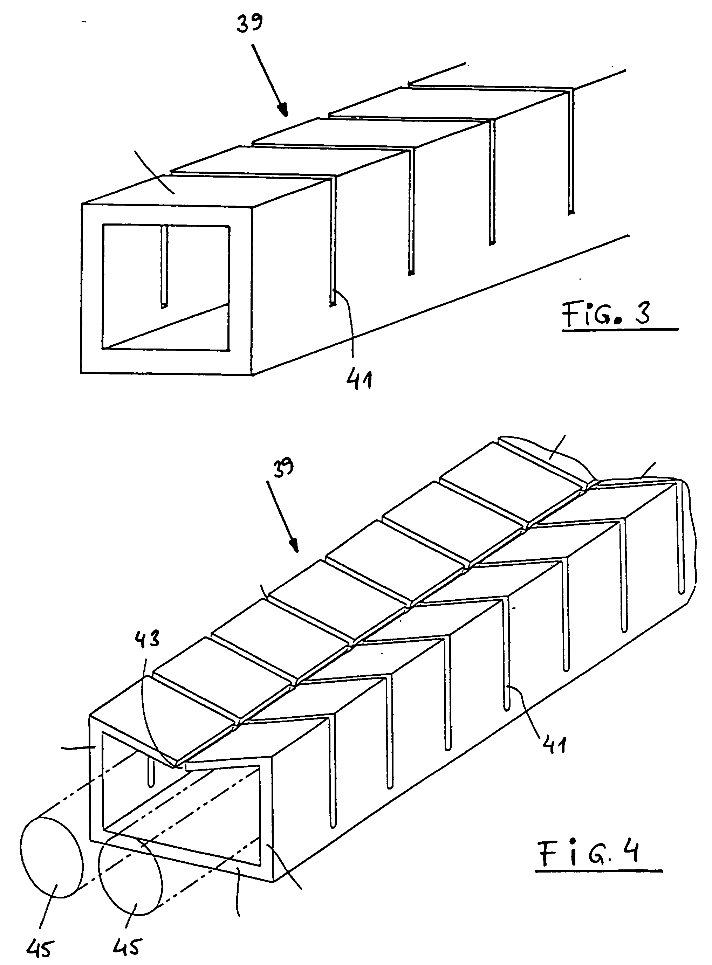

In der eigenen EP-Patentanmeldung 91105430.2 (EP-A-0490022) ist ein Schleppkettenersatz beschrieben, mit dem die Probleme herkömmlicher Schleppkettenanordnungen überwunden werden. Hierzu wird die zu führende Leitung oder Leitungsanordnung mindestens auf derjenigen Seite, auf welcher die beiden Trums der Leitung oder Leitungsanordnung zueinander weisen, mit einer in Leitungslängsrichtung wirksamen Gleiteinrichtung versehen, welche eine Reibung zwischen den beiden Trums auch bei der Aneinanderliegen verhindert. Eine der Lösungsmöglichkeiten, die in der EP-A-0490022 angegeben sind, besteht in einem Leitungsaufnahmekanal, in dem eine oder mehrere zu führende Leitungen angeordnet sind und der aus Material guter Gleitfähigkeit besteht. Einige der in der EP-A-0490022 gezeigten Ausführungsformen für einen derartigen Schleppkettenersatz sind in den beiliegenden Fig. 3, 5 und 6 gezeigt.

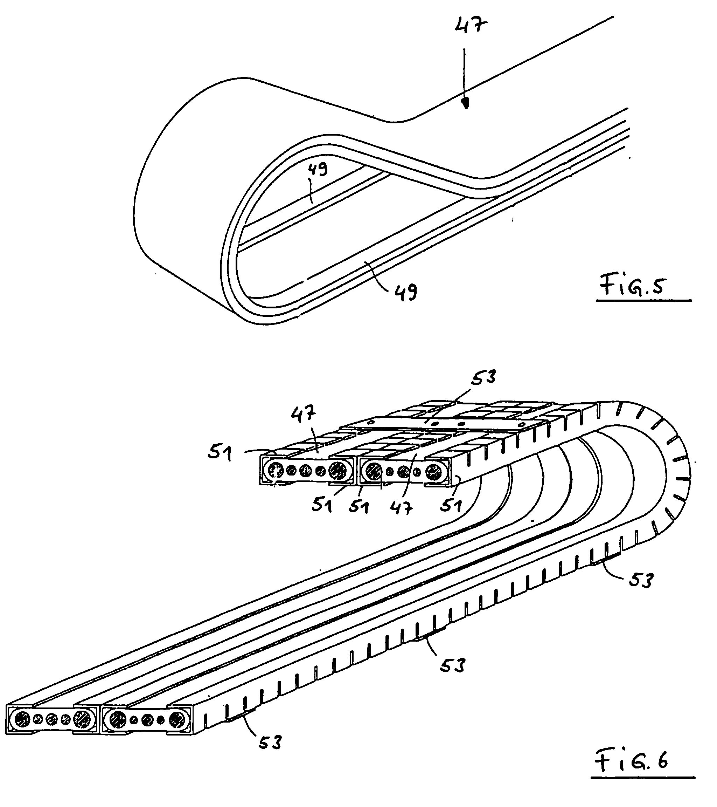

Eine Weiterbildung eines derartigen Schleppkettenersatzes in Form eines Leitungsaufnahmekanals ist in der eigenen EP-A-0544027 beschrieben. Diese Weiterbildung besteht darin, eine Wand des Leitungsaufnahmekanals mit einem sich über dessen gesamte Länge erstreckenden Eindrückschlitz zu versehen, durch welchen die Leitung oder Leitungen, die von dem Leitungsaufnahmekanal aufgenommen werden sollen, von außen in den Leitungskanal hineingedrückt werden können. Eine Ausführungsform dieser Weiterbildung ist in der beiliegenden Fig. 4 gezeigt.

Die in den beiliegenden Fig. 3, 4 und 6 gezeigten Ausführungsformen eines Schleppkettenersatzes sind mit in Längsrichtung voneinander beabstandeten Querschlitzen versehen, die eine schleifenartige Biegung des Schleppkettenersatzes ermöglichen. Der maximale Biegeradius wird wesentlich durch die räumliche Frequenz, d.h., den Abstand der einzelnen Querschlitze voneinander, bestimmt.

Die in den beiliegenden Fig. 3, 4 und 6 gezeigten Ausführungsformen eines Schleppkettenersatzes eignen sich zur Verbindung einer feststehenden und einer beweglichen Einrichtung dann recht gut, wenn sich die bewegliche Einrichtung linear hin- und herbewegt derart, daß die beidseits des Schleifenteils befindlichen Trums immer genau parallel übereinander oder nebeneinander verlaufen und nur in eine Richtung gebogen werden.

Ist eine Biegung auch in der entgegengesetzten Richtung erforderlich, als sie in beiliegender Fig. 6 gezeigt ist, kann man zwischen den gezeigten Querschlitzen entgegengesetzt gerichtete Querschlitze anordnen. Bei dem in Fig. 3 gezeigten Leitungsaufnahmekanal für ein oder mehrere lose eingelegte Leitungen würden zwischen den von der oberen Kanalwand her eindringenden Querschlitzen zusätzlich von der unteren Kanalwand her eindringende Querschlitze angeordnet, die sich je bis in die Nähe der Oberwand erstrecken. Ein derartiger Schleppkettenersatz würde eine S-förmige Biegeschleife ermöglichen. Allerdings würde ein derartiger Schleppkettenersatz ein Auseinanderziehen in Längsrichtung ermöglichen, ähnlich einer Girlande. Dies kann problematisch sein, da dann die Zugentlastungsfunktion des Leitungsaufnahmekanals für die eingelegten Leitungen verloren gehen kann und Zugspannungen zwischen feststehender Einrichtung und beweglicher Einrichtung auf die mit dem Schleppkettenersatz geführten Leitungen wirken können. Aus der Druckschrift D1 = US-A-3,630,325 ist ein Schleppkettenersatz für eine Leitungsanordnung, deren Enden mit einer feststehenden Einrichtung oder mit einer relativ dazu beweglichen Einrichtung verbunden sind, und die zwischen deren Enden flexibel ist, bekannt. Diese bekannte Anordnung weist insbesondere einen Leitungsaufnahmekanal 11 auf, der mindestens einen Kanalinnenraum zur losen Aufnahme mindestens einer Leitung besitzt. Ferner zeigt dieser Stand der Technik eine Umfangswand des Leitungsaufnahmekanals mit einer Vielzahl in Kanallängsrichtung im Abstand voneinander angeordneter, quer zur Kanallängsrichtung verlaufender Umfangsschlitze, die von einem Steg unterbrochen sind.

Weder herkömmliche Schleppketten noch die bisher erläuterten Schleppkettenersatz-Ausführungsformen ermöglichen eine dreidimensionale Beweglichkeit zwischen festehender Einrichtung und beweglicher Einrichtung. Diese ist beispielsweise erforderlich, wenn man einen Roboterarm mit einer feststehenden Einrichtung, beispielsweise am Fuß des Roboters, verbinden möchte und zwischen dem Roboterarm und der feststehenden Einrichtung mehrere in verschiedenen Richtungen bewegliche Gelenke angeordnet sind.

Mit der vorliegenden Erfindung wird ein Schleppkettenersatz verfügbar gemacht, der dreidimensionale Bewegungen einer beweglichen Einrichtung gegenüber einer feststehenden Einrichtung zuläßt. Diese Aufgabe wird erfindungsgemäß gelöst durch einen Schleppkettenersatz mit den im Patentanspruch 1 angegebenen Merkmalen. Den abhängigen Ansprüchen 2-13 sind vorteilhafte Weiterbildungen entnehmbar.

Zu diesem Zweck sieht die Erfindung einen Schleppkettenersatz mit einem Leitungsaufnahmekanal vor, dessen Außenumfangswand mit einer Vielzahl in Kanallängsrichtung im Abstand voneinander angeordneter, quer zur Kanallängsrichtung verlaufender Umfangsschlitze versehen ist, die je um den gesamten Umfang des Leitungsaufnahmekanals umlaufend nur von einem gelenkig wirkenden Steg oder nur von zwei sich im Winkelabstand von 180° diametral gegenüberliegenden gelenkig wirkenden Stegen unterbrochen ist bzw. sind. Dabei sind die Stege benachbarter Umfangsschlitze um einen Umfangswinkel von 90° zueinander versetzt. Die Breite der Umfangsschlitze und deren Abstände voneinander sind entsprechend dem gewünschten maximalen Biegeradius des Leitungsaufnahmekanals dimensioniert. Die Stegbreite in Umfangsrichtung des Leitungsaufnahmekanals gesehen beträgt nur einen Bruchteil der Abmessung der zugehörigen Kanalwand in dieser Umfangsrichtung.

Bei einem Schleppkettenersatz, der im Betrieb schleifenartige Biegebereiche bildet und bei dem sich die beidseits des Schleifenbereichs befindlichen Trums gleitend aneinander vorbeibewegen können, sollte die Breite der Umfangsschlitze nicht zu groß gemacht werden, um ein Verhaken der aneinander gleitenden Trums zu verhindern. In diesem Fall sollte ein erwünschter maximaler Biegeradius durch eine größere Anzahl dichter beabstandeter Umfangsschlitze ermöglicht werden.

Man kann den maximalen Biegeradius entlang dem Leitungsaufnahmekanal dadurch variieren, daß man den Abstand aufeinander folgender Umfangsschlitze in verschiedenen Kanalabschnitten unterschiedlich macht.

Bei gleicher Anzahl Umfangsschlitze pro Längeneinheit des Leitungsaufnahmekanals erreicht man einen besonders hohen maximalen Biegeradius dadurch, daß man jeden Umfangsschlitz mit Ausnahme eines einzigen gelenkig wirkenden Steges um den gesamten Umfang des Leitungskanals umlaufen läßt. Hierbei kann es allerdings zu einer gewissen Längsdehnung entsprechend dem Girlandeneffekt kommen. Diese Ausführungsform ist daher nicht geeignet, wenn derartige Längsdehnungen des Leitungsaufnahmekanals vermieden werden sollen. In diesem Fall empfiehlt sich eine Ausführungsform, bei welcher jeder Umfangsschlitz durch zwei sich im Winkelabstand von 180° diametral gegenüberliegende gelenkig wirkende Stege unterbrochen ist.

Je dünner in Umfangsschlitzrichtung gesehen man die Stege macht, desto größer ist bei einem Leitungsaufnahmekanal vorgegebener Umfangswandstärke und vorgegebener Materialflexibilität die Verbiegbarkeit des Schleppkettenersatzes und umso weniger Verbiegekraft muß aufgewendet werden. Dem sind aber Grenzen gesetzt durch die Längsrichtungzugkraft, die der Schleppkettenersatz aushalten soll. Macht man die Stege zu dünn, können sie reißen. Ihre Dicke, in Umfangsschlitzrichtung gesehen, liegt daher vorzugsweise im Bereich von etwa 0,5 bis 10%, besonders bevorzugt bei etwa 2% der Umfangslänge des Leitungsaufnahmekanals.

Die Längsrichtungsstabilität des Leitungsaufnahmekanals und damit des Schleppkettenersatzes kann zusätzlich erhöht werden durch zwei kreuzweise im Leitungsaufnahmekanal angeordnete Trennwände, die sich je von gegenüberliegenden Stellen des Kanalumfangs erstrecken und in Längsrichtung des Leitungsaufnahmekanals durch diesen hindurch verlaufen. Deren Kreuzungsschnittlinie liegt vorzugsweise in der neutralen Biegezone des Leitungsaufnahmekanals, bei Leitungsaufnahmekanälen mit symmetrischem Querschnitt demnach in der Mittellängsachse des Leitungsaufnahmekanals.

Der Leitungsaufnahmekanal weist vorzugsweise einen rechteckigen, kreisrunden, ovalen oder elliptischen Querschnitt auf.

Die Umfangsschlitze setzen sich dabei vom Kanalumfang aus von den Außenenden einer der beiden Trennwände bis zu den je gegenüberliegenden Oberflächen der anderen Trennwand fort, wobei sich die Trennwände, in welche sich die Umfangsschlitze, hineinerstrecken, bezüglich in Kanallängsrichtung aufeinanderfolgender Umfangsschlitze abwechseln. Dadurch bleibt das Kreuzzentrum der beiden Trennwände über die gesamte Kanallänge ohne Unterbrechung und kann eine Längsdehnung des Leitungsaufnahmekanals verhindern.

Die Erfindung schafft einen Schleppkettenersatz mit dreidimensionaler Verbiegbarkeit, zu welchem Zweck ein Leitungsaufnahmekanal vorgesehen ist, der in Leitungslängsrichtung voneinander beabstandete Umfangsschlitze aufweist, die je bis auf einen Rest in Form eines oder sich diametral gegenüberliegender zweier Stege umlaufen. Die Stege benachbarter Umfangsschlitze haben einen Winkelabstand von 90° voneinander.

Weitergehende Ausführungsformen sind den Patentansprüchen entnehmbar, die hiermit durch Bezugnahme ausdrücklich zu einem Teil dieser Beschreibung gemacht werden.

Anhand der beiliegenden Zeichnungen werden nun erfindungsgemäße Ausführungsformen näher erläuert. In den Zeichnungen zeigen:
- Fig. 1: eine erste Ausführungsform eines erfindungsgemäßen dreidimensionalen, kanalförmigen Schleppkettenersatzes;
- Fig. 2: eine zweite Ausführungsform eines erfindungsgemäßen dreidimensionalen, kanalförmigen Schleppkettenersatzes;
- Fig. 3: eine Ausführungsform eines nur in einer Richtung verbiegbaren kanalförmigen Schleppkettenersatzes aus einer älteren EP-Anmeldung;
- Fig. 4: eine Modifizierung der in Fig. 3 gezeigten Ausführungsform;
- Fig. 5: eine Ausführungsform eines Schleppkettenersatzes mit Gleitbändern aus einer älteren EP-Anmeldung ; und
- Fig. 6: eine Ausführungsform eines Schleppkettenersatzes aus einer älteren EP-Anmeldung mit Gleitrinnen.

Fig. 1 zeigt einen Leitungsaufnahmekanal 11 für einen dreidimensional beweglichen Schleppkettenersatz. Der Leitungsaufnahmekanal 11 weist einen rechteckigen Querschnitt auf und besitzt eine Oberwand 13, eine Unterwand 15, eine rechte Seitenwand 17 und eine linke Seitenwand 19. Eine vertikale Trennwand 21 erstreckt sich in der Mitte zwischen den Seitenwänden 17 und 19 von der Oberwand 13 zur Unterwand 15. Eine horizontale Trennwand 23 erstreckt sich in der Mitte zwischen Oberwand 13 und Unterwand 15 von der rechten Trennwand 17 zur linken Trennwand 19.

Begriffe wie links, rechts, vertikal, horizontal, oben und unten werden zur einfacheren Ausdrucksweise unter Zugrundelegung der Darstellung in Fig. 1 verwendet. Selbstverständlich gelten sie nicht absolut, da ein Schleppkettenersatz, wie er in der Fig. 1 und den weiteren Figuren gezeigt ist, beim praktischen Einsatz beliebig andere Lagen als die in den Figuren gezeigten einnehmen kann.

Der gesamte Leitungsaufnahmekanal 11 ist vorzugsweise einstückig extrudiert. Dies umfaßt das durch die Trennwände 21 und 23 gebildete Kreuz im Innenraum des Leitungsaufnahmekanals 11. Die Kreuzungsstelle 25 verläuft in der Kanallängsachse und damit in der neutralen Biegezone des Leitungsaufnahmekanals 11.

Der Leitungsaufnahmekanal 11 ist mit einer Vielzahl in Kanallängssrichtung im Abstand voneinander angeordneter, quer zur Kanallängsrichtung verlaufender Umfangsschlitze 27 und 29 versehen, die je um den gesamten Umfang des Leitungsaufnahmekanals 11 umlaufend nur von zwei sich im Winkelabstand von 180° diametral gegenüberliegenden, gelenkig wirkenden Stegen 31 bzw. 33 unterbrochen sind. Die Stege 31, 33 befinden sich je in der Mitte einer der Seitenwände 17, 19 oder in der Mitte der Oberwand 13 bzw. der Unterwand 15. Die Stege in der Unterwand 15 und in der linken Seitenwand 19 sind in Fig. 1 nicht zu sehen.

Bei der dargestellten Ausführungsform sind die Stege 31 und 33 durch Wandbereiche gebildet, die zwischen den Umfangsschlitzen 27 bzw. 29 stehengeblieben sind. Die elastische und nicht-elastische Verbiegbarkeit der Stege 31, 33 ist daher durch das für den Leitungsaufnahmekanal 11 verwendete Material bestimmt.

Ein wesentlichen Gesichtspunkt der vorliegenden Erfindung ist nun, daß die Stege 31 und 33 benachbarter Umfangsschlitze 27 bzw. 29 um einen Umfangswinkel von 90° zueinander versetzt sind. Das kann man anders auch so ausdrücken, daß die oberen und die unteren Bereiche der Umfangsschlitze 27 sich von der Oberwand 13 bzw. der Unterwand 15 aus in die Seitenwände 17 und 19 hineinerstrecken, wohingegen sich die linken und die rechten Bereiche der Umfangsschlitze 29 von der linken Seitenwand 19 bzw. der rechten Seitenwand 17 aus in die Oberwand 13 bzw. die Unterwand 15 hineinerstrecken, je bis zu den zugehörigen Stegen 31 bzw. 33. Dabei erstrecken sich die Umfangsschlitze 27 von den Umfangsenden der vertikalen Trennwände 21 bis zu der je gegenüberliegenden Oberfläche der horizontalen Trennwand 23, während sich die Umfangsschlitze 29 von den Umfangsenden der horizontalen Trennwand 23 bis zu den je gegenüberliegenden Oberflächen der vertikalen Trennwand 21 erstrecken. Die Kreuzungsstelle 25 zwischen vertikaler Trennwand 21 und horizontaler Trennwand 23 bleibt daher über die gesamte Länge des Leitungsaufnahmekanals ohne Unterbrechung.

Da für einen derartigen Leitungsaufnahmekanal 11 ein Kunststoffmaterial mit gewisser elastischer Verbiegbarkeit verwendet wird, können die Stege 31 und 33 eine gewisse Gelenkfunktion ausüben. Für Biegebewegungen des Leitungsaufnahmekanals 11 in Richtung der vertikalen Trennwand 21 nach oben oder unten dienen die Stege 31 als Gelenke. Für Biegebewegungen des Leitungsaufnahmekanals 11 in Richtung der horizontalen Trennwand 23 nach links oder nach rechts dienen die Stege 33 als Gelenke. Durch das Zusammenwirken der durch die Stege 31 und durch die Stege 33 gebildeten Gelenke wird somit insgesamt eine dreidimensionale Bewegung ermöglicht. Der maximale Biegeradius ist dabei durch das Zusammenwirken von Umfangsschlitzbreite und räumlicher Frequenz, d.h., Anzahl der Umfangsschlitze 27, 29 pro Längeneinheit des Leitungsaufnahmekanals 11, gegeben.

Da jeder Umfangsschlitz durch zwei gegenüberliegende Stege 31 bzw. 33 unterbrochen ist und sich die Umfangsschlitze 27, 29 nicht durch die Kreuzungsstelle 25 hindurch erstrecken, ist absolute Längsstabilität des Leitungsaufnahmekanals 11 gegen Längsausdehnungen gegeben.

Diese Längsstabilität bleibt auch erhalten, wenn man auf dem Außenumfang des Leitungsaufnahmekanals 11 pro Umfangsschlitz 27, 29 nur einen Steg 31 bzw. 33 vorsieht und der jeweilige Umfangsschlitz 27 bzw. 29 die nicht an den Steg 31 bzw. 33 angrenzende Trennwand 21 bzw. 23 von deren beiden Umfangsenden her bis zur Kreuzungsstelle 25 hin und die an den Steg 31 bzw. 33 angrenzende Trennwand 23 bzw. 21 nur von dem vom Steg 31 bzw. 33 entfernten Umfangsende her bis zur Kreuzungsstelle 25 hin durchsetzt, wobei die Kreuzungsstelle 25 selbst überall ungetrennt bleibt.

Stellt die Längsausdehnung kein Problem dar oder ist sie gar gewünscht, sieht man pro Umfangsschlitz 27, 29 nur einen Steg 31 bzw. 33 und läßt entweder die Trennwände 21, 23 ganz weg oder setzt jeden Umfangsschlitz 27, 29 derart durch beide Trennwände 21, 23 hindurch fort, daß nichts außer dem einen Steg 31 bzw. 33 übrig bleibt. In diesen beiden Fällen wird ein girlandenhaftes Auseinanderziehen des Leitungsaufnahmekanals 11 möglich.

Die Breite der Stege 31, 33 in Richtung der Umlaufschlitze 27, 29 bestimmt sich hauptsächlich durch die gewünschte Verbiegbarkeit des Leitungsaufnahmekanals 11 und hängt somit einerseits von der Elastizität des für den Leitungsaufnahmekanal 11 gewählten Materials und andererseits von dessen Wandstärke ab.

Durch die Trennwände 21 und 23 werden im Inneren des Leitungsaufnahmekanals 11 vier Innenkammern 35 gebildet, in die je eine oder mehrere ein- oder mehradrige Leitungen eingelegt werden können. Diese Aufteilung hat den Vorteil, daß sich die einzelnen Leitungen bei einer Biegebewegung des Leitungsaufnahmekanals 11 nicht soweit in Radialrichtung hin- und herbewegen.

Wenn starke Biegebewegungen des Leitungsaufnahmekanals 11 ermöglicht und erforderlich sind, kann es von Vorteil sein, die in den Leitungsaufnahmekanal 11 eingelegten Leitungen mit memory-fähigem Material aufzubauen und sie mittels Memory-Behandlung in eine Wendelform vorzuformen, wie dies von Telefonhörerleitungen bekannt ist. Die Leitungen können dann Dehnungen, die durch starke Biegung des Leitungsaufnahmekanals bedingt sind, problemlos mitmachen und nach Rückkehr des Leitungsaufnahmekanals 11 aus dieser starken Biegung wieder rückgängig machen.

Fig. 2 zeigt eine Ausführungsform, die mit der Ausführungsform nach Fig. 1 übereinstimmt, mit Ausnahme von T-förmigen Schlitzverbreiterungen der Umfangsschlitze 27 und 29. Die Schlitzverbreiterungen können auch eine andere Form haben, beispielsweise kreisförmig oder ellipsenförmig sein. Die Schlitzverbreiterungen 37 verhindern einerseits das Risiko des Einreißens der Schlitzenden der Umfangsschlitze 27 und 29. Die Schlitzverbreiterungen 37 haben andererseits eine Vergrößerung der Steglängen der Stege 31 und 33 in Richtung quer zur Verlaufsrichtung der Umfangsschlitze 27 und 29 zur Folge, was die elastische Verbiegbarkeit der Stege 31 und 33 erhöht.

Die Fig. 3 bis 6 zeigen zum besseren Verständnis der Erfindung Schleppkettenersatz-Ausführungsformen, die bereits in den genannten (nachveröffentlichten) Patentanmeldungen EP 91105430.2 und EP 91120167.1 gezeigt sind. Eine ausführliche Beschreibung in der vorliegenden Anmeldung ist daher nicht erforderlich. Hierfür wird auf die genannten EP-Patentanmeldungen verwiesen. Die Fig. 3 bis 6 zeigen je eine Ausführungsform eines Schleppkettenersatzes, der nur in einer Richtung biegefähig ist. Im Fall der Fig. 3 und 4 ist der Schleppkettenersatz durch einen Leitungsaufnahmekanal 39 mit von dessen (in den Fig. 3 und 4 gesehen) Oberseite her eingebrachten Querschlitzen 41 gebildet. Bei der in Fig. 4 gezeigten Ausführungsform ist die obere Wand außerdem mit einem sich in Kanallängsrichtung erstreckenden Längsspalt versehen, durch den hindurch Leitungen 45 in den Innenraum dieses Leitungsaufnahmekanals eindrückbar sind.

Fig. 5 zeigt eine Bandleitung 47, die schleifenartig zu einem Obertrum und einem Untertrum gebogen ist, deren zueinander weisende Seiten an ihren Seitenrändern mit je einem Gleitband 49 aus Material guter Aneinandergleitfähigkeit versehen sind.

Fig. 6 zeigt eine Ausführungsform eines Schleppkettenersatzes mit zwei Bandkabel 47, deren Seitenränder je in eine Gleitrinne 51 aus Material mit guter Aneinandergleitfähigkeit eingebracht sind. Die Gleitrinnen 51 sind mit Querschlitzen 41 versehen, durch welche sie in der in Fig. 6 dargestellten Weise zusammen mit den Bandkabeln 47 verbiegbar sind. Mittels sich quer erstreckender Haltespangen 53 sind die zwei Bandkabeln 47 und die je zugehörigen Gleitrinnen 51 zu einer Schleppkettenersatz-Leitungseinheit zusammengefaßt.

Gemäß dem zweiten Erfindungsaspekt sind in den Fig. 3 und 4 die Leitungsaufnahmekanäle 39, in Fig. 5 die Gleitbänder 49 und in Fig. 6 die Gleitrinnen 51 mit Memory-Material aufgebaut, mittels welchem sie je eine Vorzugsform speichern, die einer Vorzugsstellung, insbesondere neutralen Stellung oder Ruhestellung, einer zugehörigen beweglichen Einrichtung angepaßt ist.

Bei den in den Fig. 5 und 6 gezeigten Ausführungsformen kann der Memory-Effekt auch dadurch erzeugt oder mit erzeugt werden, daß die Bandleitung bzw. Bandleitungen 47 mit einem Memory-Effekt aufweisenden Material aufgebaut werden.

## Patentansprüche

1. Schleppkettenersatz für eine Leitungsanordnung, deren Enden mit einer feststehenden Einrichtung bzw. mit einer relativ dazu beweglichen Einrichtung verbunden sind und die zwischen deren Enden flexibel ist, wobei
a) der Schleppkettenersatz einen Leitungsaufnahmekanal (11) aufweist, der mindestens einen Kanalinnenraum zur losen Aufnahme mindestens einer einoder mehradrigen Leitung besitzt,
b) die Umfangswand des Leitungsaufnahmekanals (11) zur Verbiegbarkeit des Leitungsaufnahmekanals (11) quer zu dessen Längsrichtung mit einer Vielzahl in Kanallängsrichtung im Abstand voneinander angeordneter, quer zur Kanallängsrichtung verlaufender Umfangsschlitze (27, 29) versehen ist, die je um den gesamten Umfang des Leitungsaufnahmekanals (11) umlaufend nur von einem gelenkig wirkenden Steg (31, 33) oder nur von zwei sich im Winkelabstand von 180° diametral gegenüberliegenden gelenkig wirkenden Stegen (31, 33) unterbrochen ist bzw. sind,
c) und wobei die Breite der Umfangsschlitze (27, 29) und deren Abstände voneinander entsprechend dem gewünschten maximalen Biegeradius des Leitungsaufnahmekanals (11) dimensioniert sind ;
dadurch gekennzeichnet,
d) daß die Stege (31, 33) benachbarter Umfangsschlitze (27, 29) um einen Umfangswinkel von 90° zueinander versetzt sind,
e) wobei die Stegbreite in Umfangsrichtung des Leitungsaufnahmekanals (11) gesehen nur einen Bruchteil der Abmessung der zugehörigen Kanalwand in dieser Umfangsrichtung ausmacht.

2. Schleppkettenersatz nach Anspruch 1, dadurch gekennzeichnet, daß der Leitungsaufnahmekanal (11) aus Material guter Aneinandergleitfähigkeit besteht oder mindestens auf einer Außenwand mit derartigem Material versehen ist.

3. Schleppkettenersatz nach Anspruch 1 oder 2, dadurch gekennzeichnet, daß jeder Steg (31, 33) in Umfangsrichtung des Leitungsaufnahmekanals (11) gesehen eine Stegbreite im Bereich von etwa 0,5 bis 10%, vorzugsweise von etwa 2% der Umfangslänge des Leitungsaufnahmekanals (11) aufweist.

4. Schleppkettenersatz nach einem der Ansprüche 1 bis 3, dadurch gekennzeichnet, daß der Abstand benachbarter Umfangsschlitze (27, 29) in Längsrichtung des Leitungsaufnahmekanals (11) über die gesamte Länge des Leitungsaufnahmekanals (11) gleich ist.

5. Schleppkettenersatz nach einem der Ansprüche 1 bis 3, dadurch gekennzeichnet, daß der Abstand benachbarter Umfangsschlitze (27, 29) in Längsrichtung des Leitungsaufnahmekanals (11) in verschiedenen Längsrichtungsabschnitten des Leitungsaufnahmekanals (11) unterschiedlich ist.

6. Schleppkettenersatz nach einem der Ansprüche 1 bis 5, dadurch gekennzeichnet, daß die Umfangsschlitze (27, 29) an ihren an die Stege (31, 33) angrenzenden Enden mit sich vorzugsweise T-, ellipsen-, oval- oder kreisförmig erweiternden Schlitzenden (37) versehen sind.

7. Schleppkettenersatz nach einem der Ansprüche 1 bis 6, dadurch gekennzeichnet,
- daß der Leitungsaufnahmekanal (11) mittels mindestens zweier Trennwände (21, 23) in mehrere in Kanallängsrichtung verlaufende Innenkammern (35) aufgeteilt ist, wobei sich die Trennwände (21, 23) in der vorzugsweise durch die Längsachse des Leitungsaufnahmekanals (11) gebildeten neutralen Biegezone kreuzen (25) und sich zwischen gegenüberliegenden Umfangsstellen des Leitungsaufnahmekanals (11) erstrecken,
- daß sich jeder Umfangsschlitz (27, 29) von gegenüberliegenden Umfangsenden einer der beiden Trennwände (21, 23) aus bis zur Kreuzungsstelle (25) der Trennwände (21, 23) hin fortsetzt, ohne die Kreuzungsstelle (25) zu durchsetzen,
- daß jeder Umfangsschlitz (27, 29) durch zwei sich im Umfangswinkelabstand von etwa 180° gegenüberliegende Stege (31, 33) der Umfangswand des Leitungsaufnahmekanals (11) unterbrochen wird, wobei die Stege (31, 33) an je ein Umfangsende einer nicht von einem Umfangsschlitz (27, 29) durchsetzten Trennwand (21, 23) angrenzen,
- und daß in Kanallängsrichtung aufeinanderfolgende Umfangsschlitze (27, 29) sich abwechselnd in verschiedene Trennwände (21, 23) fortsetzen.

8. Schleppkettenersatz nach einem der Ansprüche 1 bis 6, dadurch gekennzeichnet,
- daß der Leitungsaufnahmekanal (11) mittels mindestens zweier Trennwände (21, 23) in mehrere in Kanallängsrichtung verlaufende Innenkammern (35) aufgeteilt ist, wobei sich die Tennwände (21, 23) in der vorzugsweise durch die Längsachse des Leitungsaufnahmekanals (11) gebildeten neutralen Biegezone kreuzen (25) und sich zwischen gegenüberliegenden Umfangsstellen des Leitungsaufnahmekanals (11) erstrecken,
- daß pro Umfangsschlitz (27, 29) nur ein Steg (31, 33) vorgesehen ist,
- daß jeder Umfangsschlitz (27, 29) die nicht an den Steg (31, 33) angrenzende Trennwand (27, 29) von deren beiden Umfangsenden her bis zur Kreuzungsstelle (25) hin und die an den Steg (31, 33) angrenzende Trennwand (21, 23) nur von dem vom Steg (31, 33) entfernten Umfangsende her bis zur Kreuzungsstelle (25) hin durchsetzt, wobei die Kreuzungsstelle (25) selbst überall ungetrennt bleibt,
- und daß sich bei in Kanallängsrichtung aufeinanderfolgende Umfangsschlitze (27, 29) die Trennwände (21, 23), die von beiden Umfangsenden her vom jeweiligen Umfangsschlitz (27, 29) durchsetzt werden, und die Trennwände (21, 23), die nur von einem Umfangsende her vom jeweiligen Umfangsschlitz (27, 29) durchsetzt werden, abwechseln.

9. Schleppkettenersatz nach einem der Ansprüche 1 bis 6, dadurch gekennzeichnet,
- daß der Leitungsaufnahmekanal (11) mittels mindestens zweier Trennwände (21, 23) in mehrere in Kanallängsrichtung verlaufende Innenkammern (35) aufgeteilt ist, wobei sich die Trennwände (21, 23) in der vorzugsweise durch die Längsachse des Leitungsaufnahmekanals (11) gebildeten neutralen Biegezone kreuzen (25) und sich zwischen gegenüberliegenden Umfangsstellen des Leitungsaufnahmekanals (11) erstrecken,
- daß pro Umfangsschlitz (27, 29) nur ein Steg (31, 33) vorgesehen ist
- und daß sich jeder Umfangsschlitz (27, 29) gänzlich durch beide Trennwände (21, 23) und damit auch durch die Kreuzungsstelle (25) hindurch erstreckt.

10. Schleppkettenersatz nach einem der Ansprüche 1 bis 9, dadurch gekennzeichnet, daß der Leitungsaufnahmekanal (11) einen geschlossenen Rechteckquerschnitt aufweist.

11. Schleppkettenersatz nach einem der Ansprüche 1 bis 9, dadurch gekennzeichnet, daß der Leitungsaufnahmekanal einen geschlossenen kreis-, ellipsen- oder ovalförmigen Querschnitt aufweist.

12. Leitungsanordnung mit einem Schleppkettenersatz nach einem der Ansprüche 1 bis 11 und mit mindestens einer in dem Schleppkettenersatz angeordneten einoder mehradrigen Leitung (45).

13. Leitungsanordnung nach Anspruch 12, gekennzeichnet durch einen Schleppkettenersatz, nach einem der Ansprüche 1 bis 11 mit einem Leitungsaufnahmekanal (11) und durch mindestens eine lose in den Leitungsaufnahmekanal (11; 39) eingelegte ein- oder mehradrige Leitung, die mit einem Memory-Effekt aufweisenden Material aufgebaut und in Wendelform vorgeformt ist.

## Claims

1. A dragchain replacement for a line assembly whose ends are connected to a stationary means and to a means movable relatively thereto, respectively, and which is flexible between its ends, wherein
a) the dragchain replacement comprises a line receiving channel (11) having at least one channel interior space for loosely accommodating at least one single- or multi-conductor line,
b) the circumferential wall of the line receiving channel (11), for bendability of the line receiving channel (11) transversely of its longitudinal direction, is provided with a multiplicity of circumferential slots (27, 29) spaced apart in the longitudinal direction of the channel and extending transversely of the longitudinal direction of the channel, with each of said circumferential slots, in extending around the entire circumference of line receiving channel (11), being interrupted only by one web (31, 33) with articulation effect or only by two webs (31, 33) with articulation effect located diametrically opposite each other with an angular spacing of 180°,
c) and with the width of the circumferential slots (27, 29) and the distances from each other being dimensioned in accordance with the desired maximum bending radius of the line receiving channel (11),
characterized in
d) that the webs (31, 33) of adjacent circumferential slots (27, 29) are offset from each other by a circumferential angle of 90°,
e) with the web width as seen in circumferential direction of the line receiving channel (11) being only a fraction of the dimension of the associated channel wall in this circumferential direction.

2. A dragchain replacement according to claim 1, characterized in that the line receiving channel (11) consists of a material with good slidability on itself or is provided with such material on at least one outer wall.

3. A dragchain replacement according to claim 1 or 2, characterized in that each web (31, 33) as seen in the circumferential direction of the line receiving channel (11) has a web width in the range from about 0.5 to 10 %, preferably of about 2 %, of the circumferential length of the line receiving channel (11).

4. A dragchain replacement according to any one of claims 1 to 3,
characterized in that the distance between adjacent circumferential slots (27, 29) in the longitudinal direction of the line receiving channel (11) is the same throughout the length of the line receiving channel (11).

5. A dragchain replacement according to any one of claims 1 to 3,
characterized in that the distance between adjacent circumferential slots (27, 29) in the longitudinal direction of the line receiving channel (11) is different in various sections in longitudinal direction of the line receiving channel (11).

6. A dragchain replacement according to any one of claims 1 to 5,
characterized in that the circumferential slots (27, 29), at their ends adjacent the webs (31, 33), are provided with slot ends (37) expanding preferably in T-shaped, elliptical, oval or circular manner.

7. A dragchain replacement according to any one of claims 1 to 6,
characterized in
- that the line receiving channel (11) is subdivided by at least two partitions (21, 23) into a plurality of inner chambers (35) extending in longitudinal direction of the channel, with said partitions (21, 23) crossing (25) each other in the neutral bending zone formed preferably by the longitudinal axis of the line receiving channel (11), and extending between opposite circumferential locations of the line receiving channel (11),
- that each circumferential slot (27, 29) continues from opposite circumferential ends of one of the two partitions (21, 23) up to the intersection (25) of the partitions (21, 23) without extending through said intersection (25),
- that each circumferential slot (27, 29) is interrupted by two webs (31, 33) of the circumferential wall of the line receiving channel (11) which are located opposite each other with a circumferential angular spacing of about 180°, with said webs (31, 33) each being adjacent a circumferential end of a partition (21, 23) through which no circumferential slot (27, 29) extends,
- and in that successive circumferential slots (27, 29) in the longitudinal direction of the channel continue in alternating manner in different partitions (21, 23).

8. A dragchain replacement according to any one of claims 1 to 6, characterized in
- that the line receiving channel (11) is subdivided by at least two partitions (21, 23) into a plurality of inner chambers (35) extending in longitudinal direction of the channel, with said partitions (21, 23) crossing (25) each other in the neutral bending zone formed preferably by the longitudinal axis of the line receiving channel (11), and extending between opposite circumferential locations of the line receiving channel (11),
- that only one web (31, 33) is provided for each circumferential slot (27, 39),
- that each circumferential slot (27, 29) extends through the partition (27, 29) not adjoining the web (31, 33) from the two circumferential ends of said partition up to the intersection (25) and through the partition (27, 29) adjoining the web (31, 33) only from the circumferential end remote from said web (31, 33) up to the intersection (25), with the intersection (25) proper remaining unseparated at all locations,
- and that, with successive circumferential slots (27, 29) in the longitudinal direction of the channel, the partitions (21, 23), having the particular circumferential slot (27, 29) extend therethrough from both circumferential ends and the partitions (21, 23) having the particular circumferential slot (27, 29) extend therethrough from only one circumferential end, alternate with each other.

9. A dragchain replacement according to any one of claims 1 to 6,
characterized in
- that the line receiving channel (11) is subdivided by at least two partitions (21, 23) into a plurality of inner chambers (35) extending in longitudinal direction of the channel, with the partitions (21, 23) crossing (25) each other in the neutral bending zone formed preferably by the longitudinal axis of the line receiving channel (11), and extending between opposite circumferential locations of the line receiving channel (11),
- that only one web (31, 33) is provided for each circumferential slot (27, 29),
- and in that each circumferential slot (27, 29) extends completely through both partitions (21, 23) and thus also through the intersection (25) thereof.

10. A dragchain replacement according to any one of claims 1 to 9,
characterized in that the line receiving channel (11) has a closed rectangular cross-section.

11. A dragchain replacement according to any one of claims 1 to 9,
characterized in that the line receiving channel has a closed circular, elliptical or oval cross-section.

12. A line assembly comprising a dragchain replacement according to any one of claims 1 to 11 and comprising at least one single- or multi-conductor line (45) arranged in the dragchain replacement.

13. A line assembly according to claim 12,
characterized by a dragchain replacement according to any one of claims 1 to 11, comprising a line receiving channel (11), and by at least one single- or multi-conductor line that is loosely inserted in the line receiving channel (11; 39) and is composed with a material having a memory effect and is preformed in a helical shape.

## Revendications

1. Agencement à chaîne traînée pour un agencement de câbles, dont les extrémités sont reliées l'une à une installation fixe et l'autre à une installation mobile par rapport à celle-ci, et qui est flexible entre ses extrémités, dans lequel :
a) l'agencement à chaîne traînée présente un canal de réception de câbles (11) qui possède au moins une chambre intérieure de canal pour la réception lâche d'au moins un câble à un ou plusieurs fils,
b) la paroi périphérique du canal de réception de câbles (11) est pourvue, pour la flexibilité du canal de réception de câbles (11), transversalement à sa direction longitudinale, d'une multitude de fentes périphériques (27, 29) agencées en direction longitudinale du canal à distance les unes des autres et s'étendant transversalement à la direction longitudinale du canal, qui sont chacune interrompues, en s'étendant autour de toute la périphérie du canal de réception de câbles, seulement par une barrette (31, 33) faisant office d'articulation ou seulement par deux barrettes (31, 33) faisant office d'articulation situées diamétralement en vis-à-vis à une distance angulaire de 180°,
c) et dans lequel la largeur des fentes périphériques (27, 29) et leurs distances les unes des autres sont dimensionnées en correspondance du rayon de flexion maximal désiré pour le canal de réception de câbles (11),
caractérisé en ce que :
d) les barrettes (31, 33) de fentes périphériques voisines (27, 29) sont décalées les unes par rapport aux autres d'un angle périphérique de 90°, et en ce que :
e) la largeur de barrette, vue en direction périphérique du canal de réception de câbles (11), ne s'élève qu'à une fraction de la dimension de la paroi de canal associée dans cette direction périphérique.

2. Agencement à chaîne traînée selon la revendication 1, caractérisé en ce que le canal de réception de câbles (11) est constitué en un matériau présentant de bonnes propriétés de glissement, ou est pourvu au moins sur une paroi extérieure d'un tel matériau.

3. Agencement à chaîne traînée selon l'une ou l'autre des revendications 1 et 2, caractérisé en ce que chaque barrette (31, 33) présente, vue en direction périphérique du canal de réception de câbles (11), une largeur dans la plage d'environ 0,5 à 10%, de préférence d'environ 2 % de la longueur périphérique du canal de réception de câbles (11).

4. Agencement à chaîne traînée selon l'une quelconque des revendications 1 à 3, caractérisé en ce que la distance entre fentes périphériques voisines (27, 29) en direction longitudinale du canal de réception de câbles (11) est égale sur toute la longueur du canal de réception de câbles (11).

5. Agencement à chaîne traînée selon l'une quelconque des revendications 1 à 3, caractérisé en ce que la distance entre fentes périphériques voisines (27, 29) en direction longitudinale du canal de réception des câbles (11) est différente dans différents tronçons de direction longitudinale du canal de réception de câbles (11).

6. Agencement à chaîne traînée selon l'une quelconque des revendications 1 à 5, caractérisé en ce que les fentes périphériques (27, 29) sont pourvues, à leurs extrémités limitrophes des barrettes (31, 33), d'extrémités de fente (37) qui s'élargissent de préférence en forme de T, d'ellipse, en forme ovale ou circulaire.

7. Agencement à chaîne traînée selon l'une quelconque des revendications 1 à 6, caractérisé en ce que :
- le canal de réception de câbles (11) est subdivisé par au moins deux parois de séparation (21, 23) en plusieurs chambres intérieures (35) s'étendant en direction longitudinale du canal, les parois de séparation (21, 23) se croisant (25) de préférence dans la zone de flexion neutre formée par l'axe longitudinal du canal de réception de câbles (11), et s'étendant entre des emplacements périphériques situés en vis-à-vis les uns des autres du canal de réception de câbles (11),
- chaque fente périphérique (27, 29) se prolonge depuis des extrémités périphériques situées en vis-à-vis les unes des autres de l'une des deux parois de séparation (21, 23) jusqu'à l'emplacement de croisement (25) des parois de séparation (21, 23), sans traverser l'emplacement de croisement (25),
- chaque fente périphérique (27, 29) est interrompue par deux barrettes (31, 33) situées en vis-à-vis l'une de l'autre à une distance périphérique angulaire d'environ 180° de la paroi périphérique du canal de réception de câbles (11), les barrettes (31, 33) étant limitrophes d'une extrémité périphérique respective d'une paroi de séparation (21, 23) qui n'est pas traversée par une fente périphérique (27, 29), et
- les fentes périphériques (27, 29) successives en direction longitudinale du canal se prolongent en alternance dans différentes parois de séparation (21, 23).

8. Agencement à chaîne traînée selon l'une quelconque des revendications 1 à 6, caractérisé en ce que :
- le canal de réception de câbles (11) est subdivisé par au moins deux parois de séparation (21, 23) en plusieurs chambres intérieures (35) s'étendant en direction longitudinale du canal, les parois de séparation (21, 23) se croisant (25) dans la zone de flexion neutre formée de préférence par l'axe longitudinal du canal de réception de câbles (11), et s'étendant entre des emplacements périphériques en vis-à-vis les uns des autres du canal de réception de câbles (11),
- par fente périphérique (27, 29) est prévue une seule barrette (31, 33),
- chaque fente périphérique (27, 29) traverse la paroi de séparation (27, 29) qui n'est pas limitrophe de la barrette (31, 33) depuis ses deux extrémités périphériques jusqu'à l'emplacement de croisement (25), et la paroi de séparation (21, 23) qui est limitrophe de la barrette (31, 33) seulement depuis l'extrémité périphérique éloignée de la barrette (31, 33) jusqu'à l'emplacement de croisement (25), l'emplacement de croisement (25) lui-même restant partout sans séparation,
- et en ce que pour des fentes périphériques (27, 29) successives en direction longitudinale du canal, les parois de séparation (21, 23) qui sont traversées depuis les deux extrémités périphériques par la fente périphérique respective (27, 29), alternent avec les parois de séparation (21, 23) qui sont traversées depuis une seule extrémité périphérique par la fente périphérique respective (27, 29).

9. Agencement à chaîne traînée selon l'une quelconque des revendications 1 à 6, caractérisé en ce que :
- le canal de réception de câbles (11) est subdivisé par au moins deux parois de séparation (21, 23) en plusieurs chambres intérieures (35) s'étendant en direction longitudinale du canal, les parois de séparation (21, 23) se croisant (25) dans la zone de flexion neutre formée de préférence par l'axe longitudinal du canal de réception de câbles (11), et s'étendant entre des emplacements périphériques en vis-à-vis les uns des autres du canal de réception de câbles (11),
- par fente périphérique (27, 29) est prévue une seule barrette (31, 33),
- chaque fente périphérique (27, 29) s'étend entièrement à travers les deux parois de séparation (21, 23) et ainsi également à travers l'emplacement de croisement (25).

10. Agencement à chaîne traînée selon l'une quelconque des revendications 1 à 9, caractérisé en ce que le canal de réception de câbles (11) présente une section transversale rectangulaire fermée.

11. Agencement à chaîne traînée selon l'une quelconque des revendications 1 à 9, caractérisé en ce que le canal de réception de câbles présente une section transversale fermée en forme de cercle, d'ellipse ou ovale.

12. Agencement de câbles comportant un agencement à chaîne traînée selon l'une quelconque des revendications 1 à 11, comprenant au moins un câble (45) à un ou plusieurs fils, qui est agencé dans un agencement à chaîne traînée.

13. Agencement de câbles selon la revendication 12, caractérisé par un agencement à chaîne traînée selon l'une quelconque des revendications 1 à 11, comportant un canal de réception de câbles (11), et par au moins un câble à un ou plusieurs fils, qui est posé de façon lâche dans le canal de réception de câbles (11 ; 39), ce câble étant fabriqué en un matériau qui présente un effet à mémoire, et étant préformé en forme d'hélice.
